Europäisches Patentamt

European Patent Office

Office européen des brevets

(11) Publication number: **0 391 475**
**A1**

## (12) EUROPEAN PATENT APPLICATION

(21) Application number: **90200763.2**

(22) Date of filing: **29.03.90**

(51) Int. Cl.⁵: **C08L 77/06, //(C08L77/06, 23:08),(C08L77/06,33:06), (C08L77/06,51:08)**

(30) Priority: **04.04.89 NL 8900823**

(43) Date of publication of application:
**10.10.90 Bulletin 90/41**

(84) Designated Contracting States:
**AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Steffanie, Leonardus Gerardus**
**Bandstraat 6**
**NL-6121 ZG Born(NL)**

(54) **Impact resistant molded article.**

(57) The invention relates to an impact resistant moulding of polyamide 4.6, consisting of 95-60 parts by wt. of polyamide 4.6 and 5-40 parts by wt. of impact modifier, in which the polyamide 4.6 has a first melting enthalpy which is at least 30 Joule per gram higher than the second melting enthalpy. The moulding has a HDT > 280 $^\circ$C and an impact resistance at room temperature > 20 kJ/m$^2$.

EP 0 391 475 A1

## IMPACT RESISTANT MOLDED ARTICLE

The invention relates to an impact resistant molded article of polyamide 4.6. Impact resistant polyamide 4.6 compositions and molded articles made thereof are known from European patent publication 0135218. Such molded articles show good heat deflection resistance and impact resistance and are thereby superior to molded articles made of other polyamide compositions, for instance polyamide 6 and 6.6, which are used as engineering plastics. The absolute level of the heat deflection resistance decreases considerably, however. Since for many applications a very high heat deflection resistance is required, molded articles according to EP-0135218 are often not eligible. In such cases engineering plastics from the group of polyaryl ether ketone (PEEK), polyphenyl sulphide (PPS), polyether sulphon (PES) or polysulphon (PSU) are mostly used. However, in the use of these polymers various problems are encountered. The processing temperature is very high - PEEK 360-400°C, PES 340-390°C, PSU 310-390°C and requires expensive equipment, or the product is so brittle that glass fibre reinforcement is necessary. A consequence of the latter again is that thin-walled objects of rather large dimensions are difficult to obtain and often show anisotropy.

The object of the invention is therefore to provide a molded article which does not show these drawbacks and yet possesses a heat deflection resistance at the level of the most heat resistant engineering plastic, as well as a good impact resistance, without requiring therefor (glass) fibre reinforcement and being capable of molding on commonly used equipment. After intensive research it has been found now that a molded article made of an impact resistant polyamide 4.6 composition with enhanced crystallinity meets these extreme mechanical requirements and can be formed from the melt by means of commonly used equipment.

The impact resistant polyamide 4.6 molded article according to the invention, comprising of 95-60 parts by wt. of polyamide 4.6 and 5-40 parts by wt. of impact modifier and optionally other materials, is characterized in that the polyamide 4.6 in the molded article moulding has a melting enthalpy which is at least 30 Joule/g higher than the melting enthalpy determined after the polyamide has solidified again, the first melting enthalpy being measured on a sample of the molded article by means of differential scanning calorimetry (DSC) with a heating-up rate of 5°C/minute, the second after the molten sample has cooled off at a rate of 5°C/minute to below the crystallization temperature and after complete solidification has been heated up again at a rate of 5°C/min.

Since the melting enthalpy is a critical parameter in the characterization of the molded article according to the invention, the DSC measurement should be carefully interpreted. In certain cases still perceptible continued condensation of the polyamide may occur during the DSC measurement, especially if the relative viscosity of the polymer is less than about 2.5. In order to minimize the effect of this on the measurement the sample is placed in a closed pressure vessel, so that the condensation process and evaporation of water are suppressed. In cases where perceptible continued condensation still occurs, this has to be corrected for.

Preferably, the first melting enthalpy is at least 40 J/g higher than the second melting enthalpy, even more preferably the difference is at least 50 J/g.

A molded article is defined in the present invention as a body which is formed from the melt, for instance by injection moulding, extrusion, compression moulding or casting, and does not include fibres, films or granules, chips or tablets which are used as starting material shape for the shaping processes from the melt.

The polyamide 4.6 mainly consists of tetramethylene adipamide units. A high content of copolymer units is not recommendable in general, since in that case the polyamide shows a more amorphous character, which results in a lower absolute level of the improved properties. The content of tetramethylene adipamide units will therefore be at least 75% in general, but if isomorphous groups have been introduced, for instance isophthalic and/or polybutylene terephthalic acid, a higher content may be acceptable. Copolymer units may be, for instance, polyamide-forming units, such as dicarboxylic acids, diamines and lactams, imide-forming and ester-forming groups.

As impact modifier all currently used impact modifiers are in principle eligible. Examples are ethylene acrylate copolymers, if desired neutralized wholly or partially with zinc oxide or sodium hydroxide, acrylate copolymers of the core-shell type and olefinic (co)polymers. These elastomeric materials are preferably modified with active groups. Very suitable impact modifiers are acid-modified olefinic copolymers, for instance ethylene-propylene copolymers with, if desired, a third copolymer. A very suitable acid modifier appears to be maleic acid.

In general at least 5 parts by wt. of impact modifiers per 100 parts by wt. of composition are required for a significant effect on the impact resistance; content values higher than 40 parts by wt. per 100 parts by wt. of composition have a negative effect on the stiffness of the composition. Preferably, an impact modifier content between 8 and 25 % by wt. is chosen.

If desired, the polyamide composition may contain additives, for instance stabilizers, flame retarding agents, mold release agents, colorants and pigments, fillers and also reinforcing fibre materials. The composition may also contain other polymers.

Besides high heat deflection resistance and impact resistance, the molded articles according to the invention show very low water absorption and good chemical stability, low shrinkage and better resistance against oxygen in comparison with the impact resistant polyamide 4.6 compositions according to the state of the art.

A process for production of the molded articles according to the invention consists of subjecting the solidified mouldings, obtained by shaping from the melt, to a heat treatment at an elevated temperature between 220¤C and the melting temperature of the moulding. The temperature is preferably between 230 and 285¤C.

This process differs from the known process of tempering freshly shaped polyamide molded articles - see for instance Kunststoff-Taschenbuch, 23rd edition, Carl Hanser Verlag, München (1988), p.288 - which is effected at 140-170$^{\circ}$ C (litt. 1 p.288).

It is surprising that in spite of the high temperature at which the heat treatment is effected and the duration of the treatment, 0.25-24 h, preferably between 0.5 and 12 h, the impact resistance remains at a high level.

As a matter of fact the process for production of the molded articles according to the invention need not be restricted to the process as indicated above. More advanced processes, such as for instance high-frequency electromagnetic radiation, also offer possibilities.

Although in the majority of cases the polyamide will show continued condensation during the above-mentioned heat treatment, the surprisingly strong improvement of properties cannot be attributed to this process.

The invention will now be further elucidated with the following examples, without being restricted thereto however. In table 1 the mechanical properties of molded articles according to the invention are compared with those of the so-called "super engineering plastics" mentioned in the heading of the present application.

This table quite clearly demonstrates the unique combination of properties of the molded articles according to the invention, which, as the examples show, were obtained with currently used equipment at a well controllable processing temperature.

Examples and comparative examples

Materials used:
- Polyamide 4.6: STANYL TW 300 from DSM, Netherlands ($\nu_{rel}$ = 3.5)
- Impact modifier: KELTAFLEX N37$^R$ from DSM, Netherlands, a maleic acid modified EPDM/PP mixture.

If not indicated otherwise, the following test methods were used:
- Determination of the first and second melting enthalpy: Differential Scanning Calorimetry (DSC), in a DSC2 from Perkin and Elmer, on samples of about 4-8 mg in a closed pressure vessel. Heating-up and cooling-down rate 5¤C/minute over a temperature range between 30¤C and 315¤C.
- Relative viscosity, $\eta_{rel}$, on a solution of 1 g polyamide in 100 ml 96 wt.% sulphuric acid at 25¤C.
- Notched impact resistance ASTM D 256 (thickness 3.2 mm, notch 0.25 mm).
- Heat distortion temperature, HDT, ISO R 75B (1.82 MPa).

The various polyamide compositions were prepared in a Werner and Pfleiderer ZSK 30 twin-screw extruder, with the temperature set at 300¤C. From the granulate obtained, test bars for the mechanical tests were made under identical circumstances (melt temperature 315¤C and mould temperature 120¤C).

Part of the test bars were given a heat treatment for 4 hours at 260¤C in a 10 vol.% water vapour containing nitrogen atmosphere.

The examples carried out (experiments 1 and 2) and the comparative examples (experiments 3-10) are listed in table 1, which also shows the properties of the molded articles obtained.

TABLE 1

| Exp. No. | Composition | | Heat treatment | | Properties | | | | | |
|---|---|---|---|---|---|---|---|---|---|---|
| | PA 4.6 wt.% | Keltaflex N37 wt.% | yes/no | | *Hm1 J/g | *Hm2 J/g | nrel | HDT °C | impact resistance Kj/m2 (23°C) | |
| | | | + | - | | | | | | |
| 1 | 90 | 10 | + | | 122 | 80 | 3.8 | 287 | 15 | |
| 2 | 85 | 15 | + | | 126.2 | 81 | 3.8 | 283 | 22 | |
| 3 | 90 | 10 | | - | 79 | 80 | 3.3 | 100 | 36 | |
| 4 | 85 | 15 | | - | 77 | 82 | 3.3 | 96 | >100 | |
| 5 | 100 | 0 | + | | 129 | 82 | 3.9 | 285 | 6 | |
| 6 | 100 | 0 | | - | 78 | 81 | 3.4 | 160 | 10 | |
| 7*)PEEK | | | | | | | | 148 | 8.5 | |
| 8*)PPS + 40% glass fibre | | | | | | | | >260 | 3-7 | |
| 9*)PES | | | | | | | | appr.210 | 8.4 | |
| 10 PES + 30% glass fibre | | | | | | | | appr.220 | 8.3 | |

*) according to lit. 1 pp. 318-319

It is surprising that in spite of the relatively high temperature and the duration of the heat treatment the impact resistance, altough lower that that of untreated compositions, still appears to be of a high absolute level.

Molded articles according to the invention can be used where high stiffness at high temperature and good impact resistance are required, for instance in car body parts, in particular close to the engine, cogwheels, ball bearing cages and printed circuit boards and the like for electronic and/or electrical applications.

## Claims

1. Impact resistant polyamide 4.6 molded article, comprising 95-60 parts by wt. of polyamide 4.6 and 5-40 parts by wt. of impact modifier and optionally additional materials, characterized in that the polyamide 4.6 in the molded article has a melting enthalpy which is at least 30 Joule/g higher than the melting enthalpy determined after the polyamide has solidified again, the first melting enthalpy being measured on a sample of the moulding by means of differential scanning calorimetry (DSC) with a heating-up rate of 5□C/minute, the second after the molten sample has cooled off at a rate of 5□C/minute to below the crystallization temperature and after complete solidification has been heated up again at a rate of 5□C/min.

2. Molded article according to claim 1, characterized in that the first melting enthalpy is at least 40 Joule per gram higher than the second melting enthalpy.

3. Molded article according to claim 1, characterized in that the polyamide 4.6 contains at least 75% tetramethylene adipamide units.

4. Molded article according to claim 1, characterized in that the impact modifier is chosen from the group of ethylene acrylate copolymers, if desired neutralized wholly or partially with zinc oxide or sodium hydroxide, acrylate copolymers of the core-shell type and olefinic (co)polymers, if desired modified with active groups.

5. Molded article according to claim 4, characterized in that the impact modifier is an acid modified olefinic copolymer.

6. Process for the manufacture of a molded article according to the invention, successively comprising:
   a. shaping of the article from the melt;
   b. subjecting the molded article thus obtained after cooling to a heat treatment between 220□C and the melting temperature.

7. Process according to claim 6, characterized in that the heat treatment is carried out in 0.25-24 hours.

8. Process according to claim 6 or 7, characterized in that the treatment is carried out in an inert gas atmosphere containing water vapour.

9. Use of the molded articles according to any of the claims 1-5, as a cogwheel, ball bearing cage, car body part, component part close to the engine of a vehicle and printed circuit board for electric and/or electronic applications.

Claims for the following Contracting States : ES,GR

1. Process for the preparation of a molded article comprising of successively

a) mixing 95-60 parts by wt. of polyamide 4.6 and 5-40 parts by wt. of impact modifier and optionally additional materials

b) shaping of the article from the melt of said mixture

c) subjecting the molded article thus obtained after cooling to a heat treatment between 220°C and the melting temperature until the polyamide in the molded article has a melting enthalpy which is at least 30 Joule/g higher than the melting enthalpy determined after the polyamide has solidified again after being melted, the first melting enthalpy being measured on a sample of the molded article by means of differential scanning calorimetry (DSC) with a heating-up rate of 5°C/minute, the second after the molten sample has cooled down at a rate of 5°C/minute to below the crystallization temperature and after complete solidification has been heated up again at a rate of 5°C/min.

2. Process according to claim 1, characterized in that the polyamide in the molded article has a first melting enthalpy that is at least 40 Joule per gram higher than the second melting enthalpy.

3. Process according to claim 1, characterized in that the polyamide 4.6 contains at least 75% tetramethylene adipamide units.

4. Process according to claim 1, characterized in that the impact modifier is chosen from the group of ethylene acrylate copolymers, if desired neutralized wholly or partially with zinc oxide or sodium hydroxide, acrylate copolymers of the core-shell type and olefinic (co)polymers, if desired modified with active groups.

5. Process according to claim 4, characterized in that the impact modifier is an acid modified olefinic copolymer.

6. Process according to any of the claims 1-5, characterized in that the heat treatment is carried out in 0.25-24 hours.

7. Process according to any of the claims 1-6, characterized in that the treatment is carried out in an inert gas atmosphere containing water vapour.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 135 218 (STAMICARBON) | | C 08 L 77/06 // (C 08 L 77/06 C 08 L 23:08 ) (C 08 L 77/06 C 08 L 33:06 ) (C 08 L 77/06 C 08 L 51:08 ) |

TECHNICAL FIELDS
SEARCHED (Int. Cl.5)

C 08 L

The present search report has been drawn up for all claims

| Place of search | Date of completion of the search | Examiner |
|---|---|---|
| THE HAGUE | 29-06-1990 | LEROY ALAIN |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .......................................................................................................
& : member of the same patent family, corresponding
    document

EPO FORM 1503 03.82 (P0401)